# EUROPEAN PATENT SPECIFICATION

(11) **EP 2 954 239 B1**
(45) Date of publication and mention of the grant of the patent: **06.11.2019**
(21) Application number: 14748788.8
(22) Date of filing: 04.02.2014
(51) Int. Cl.: F16K 1/22, F16K 1/32, F16K 1/226, F16K 27/02

(54) **BUTTERFLY VALVE COMPRISING REMOVABLE COUPLING PART**
DROSSELVENTIL MIT ABNEHMBAREM KUPPLUNGSTEIL
VANNE PAPILLON COMPRENANT UNE PARTIE DE COUPLAGE AMOVIBLE

(30) Priority: 06.02.2013 NO 20130199
(43) Date of publication of application: 16.12.2015
(73) Proprietor: Sitek AS, 5327 Hauglandshella (NO)
(72) Inventor: BORGE, Frank, 5310 Hauglandshella (NO)
(74) Representative: Acapo AS
(86) International application number: PCT/NO2014/000013
(87) International publication number: WO 2014/123423

(56) References cited:
- EP-A1- 1 130 295
- CN-U- 201 836 409
- FR-A1- 2 488 363
- FR-A1- 2 559 232
- GB-A- 2 378 233
- JP-A- 2000 028 006
- US-A- 2 912 218
- US-A- 2 974 921
- US-A- 3 151 837
- US-A- 3 656 714
- US-B1- 6 338 467

## Description

The present invention relates to a soft-sealing, concentric butterfly valve for mounting with grooved couplings or flanges, the butterfly valve comprising a valve housing with a through running boring, in which a rotary damper, mounted to a spindle, is arranged standing in a circular-cylindrical valve seat, said valve seat being equipped internally with conical contact surfaces for the damper, the valve housing comprises on a first side a coupling end piece cast in one piece with the valve housing and equipped with an external circular groove, and the valve housing comprises on a second side several threaded bolt holes arranged radially around the through running boring.

Today, it is common to use lug type butterfly valves with threaded bore holes on both sides of the valve. This is a well tried embodiment which is approved by the classification societies. However, the fitting is labour intensive as one must first weld flanges onto the pipe ends. Thereafter, the valve is centred on the flange and bolts are tightened. The most common valves are also vulnerable to poor centring or damages to the flange. If the fitting procedures are not followed accurately, there will be a risk for leaks and damages.

In addition, this is a time consuming and thus a costly procedure. On a modern PSV vessel (platform supply ship), there are about 250 tonnes of pipe and pipe parts so that the piping work is one of the most labour intensive and costly jobs for a such new construction, and particularly within the ship building industry there is a considerable saving potential.

Couplings have been on the market for many years, but have, in the main, been used within fire protection/ sprinklers and plumbing, heating and sanitation. Lately, there has been only limited industrial application before now, as Norwegian shipyards have over the last years started to use couplings to a larger extent. Focus on savings in time and thereby costs have provided an opening for this type of equipment. Today, there are two large suppliers of couplings in the Norwegian market.

As mentioned, there are today a good selection of equipment and parts for fire protection/sprinklers and plumbing, heating and sanitation, including valves suitable for such application areas. However, there are no valves for this type of coupling that is suitable for use within ship building and the market is asking for such valves. The valve according to the invention has a particular application within the ship building industry, but can be used in general within any industry and is thus not limited to the ship building industry.

All the valves one knows for fitting with couplings have in common that the sealing is in the form of a vulcanised rubber covering on the damper. The valve housing is covered with an epoxy compound or similar surface treatment. This makes the valve vulnerable to damages in the covering both to the housing and the damper. The risk of corrosion and subsequent leakage is regarded as relatively large.

Valve types with coupling ends on both sides are not suited to fitting to the side of a ship. A number of standard lug valves are used together with flange adapters for the fitting. This is expensive equipment and not particularly suited to fitting of standard dampers.

The valve according to the invention is a soft-sealing, concentric butterfly valve which is leak proof, often with a two-sided seal. Furthermore, it can have a through running spindle fastened to the damper via a spline, square peg or taper pins. Dry spindle, isolated from the medium.

The components of the soft-sealing butterfly valve according to the invention are placed in a new housing with an end piece for fitting to a coupling, such as a mechanical grooved coupling. It is thus not a quick coupling, but a fast mechanical connection with bolts that are tightened to secure the coupling. Examples of pressure classification can be up to 64 bar for the coupling and 25 bar for the valve.

The valve seat of different materials can be mounted on or vulcanised on a hard insertion ring or support ring. The valve seat can have conical contact surfaces for the damper at the through running of the spindle and also integrated sealing rings in the opening for the running through of the spindle. This ensures a leak proof construction without the use of extra O-rings.

The valve can have a metal damper in different materials with a machined sealing surface.

The valve housing according to the invention is preferably cast in two parts. A main part can have an end pipe piece for a coupling on the one side and a standard lug embodiment with threaded bolt holes on the other side. At the fitting of the lug side against the flange, the valve will be able to be mounted to the side of the ship, to flanged pipe parts or components such as filters, pumps, etc. Mounted on this way the valve can function as a blinding of a pipe line.

According to the invention a second part in the form of an end piece, can be in the form of a flanged pipe end piece where the flange boring is adapted to the boring of the lug side of the valve. The pipe end is preferably grooved for mounting with couplings. The valve housing can have an ISO standardised top flange that makes a direct fitting of an activator possible. The valve housing has a standard short neck, but can be supplied with a long neck adapted to the isolation of pipelines.

A valve according to the invention can have a type of valve seat that seals against a counter flange without the use of additional gaskets. The contact edge in the main part of the valve housing can function as a sealing surface. When the end piece of the valve housing or a standard counter flange is mounted on the main part, the valve seat is compressed between these parts so that a leak proof connection is created in all joints.

Consequently, it is an object to provide a valve and then in particular a butterfly valve as described above.

From prior art, reference is made to, among others, US 6,125,871 A which shows a chemical fluid transfer valve (for example, for loading/unloading of bulk materials) and which is formed by a male valve assembly and a female valve assembly. This relates to a composed sampling valve with a flushing solution based on loose components and quick couplings. The butterfly valve is here a standard wafer valve for insertion between the flanges.

US 2011163532 A1 show a hose coupling for a fire engine and a method for the use of the system. The hose coupling is in the form of a quick coupling that makes it possible to get a quick connection between the fire hose and the fire engine, and even more importantly is that the system makes it possible to disconnect even faster.

Concerning the above mentioned documents, it shall be pointed out that in general both solutions relate to quick couplings. The present invention relates, as mentioned, not to a quick coupling, which will be clear in the sense that the valve housing and the coupling part shall be screwed together, i.e. a solid mechanical connection with bolts that are tightened to secure the coupling. Furthermore, the valve according to the invention is a soft-sealing, concentric butterfly valve which is leak proof, usually with a two-sided seal.

Reference is also made to US 2974921 A, US 31518374, and US 3656714A, which all relates to butterfly valves.

US 2912218 A relates to a disc valve comprising, a body divided into two parts, said parts having registering bores to form a flow passageway through the body and abutment faces in engagement with each other, the abutment faces each being grooved adjacent the bores to provide an annular recess surrounding and opening into the passageway with rigid extensions of the body parts at the bores providing lands between the bores and the recess to provide a seal receiving socket surrounding the passageway, an annular resilient element in said socket sealing between the two parts of the body, anchoring means carried by and extending radially outward from the periphery of said element and disposed about the circumference thereof, means carried by at least one of the body parts in engagement with the anchoring means and resisting radially inward movement of the anchoring means about its circumference, said resilient element having a bore extending therethrough to form a part of the passageway through the body, and a disc mounted for cooperation with the bore through the seal element to control flow through the valve.

The above mentioned objects are obtained with a butterfly valve as given in the independent claim, while alternative embodiments are given in the respective dependent claims.

According to a first aspect of the invention, a soft-sealing, concentric butterfly valve for mounting with grooved couplings or flanges is provided, the butterfly valve comprising a valve housing with a through running boring, in which a rotary damper, mounted to a spindle, is arranged standing in a circular-cylindrical valve seat, said valve seat being equipped internally with conical contact surfaces for the damper, the valve housing comprises on a first side a coupling end piece cast in one piece with the valve housing and equipped with an external circular groove, and the valve housing comprises on a second side several threaded bolt holes arranged radially around the through running boring. The valve is characterised in that a removable coupling part, comprising a second coupling end piece equipped with an external circular groove, is mounted to said second side of the valve housing, said coupling part being fastened to the valve housing with the help of bolts inserted in the threaded bolt holes, and said valve seat is compressed between the valve housing and the removable coupling part and surrounds the damper to provide a leak proof connection.

The spindle is preferably running through the valve seat and the valve seat can comprise integrated sealing rings in the openings for the through running of the spindle.

The removable coupling part preferably comprises a boring with a similar or identical diameter to the boring in the valve housing.

Furthermore, the valve housing can be equipped with a neck encompassing a collar, and an upper part of the spindle can extend above the collar and make up a rotation pivot. The valve housing can also comprise, on one or both sides of the damper, bushes or bearings for mounting of the spindle.

The valve housing can also comprise an internal edge, against which the valve seat lies, where said edge and a contact surface for a flange connection or the second coupling part can function as sealing surfaces, as the valve seat is compressed between these parts to provide a leak proof connection.

Furthermore the butterfly valve according to the invention can be surface treated by hot-dip galvanisation.

The invention shall now be described in more detail with help of the enclosed figures, in which
Figure 1 shows an outline of a butterfly valve according to the invention.
Figure 2 shows a section of the butterfly valve according to the invention.
Figure 3 shows a top outline of the butterfly valve shown in figs 1 and 2.
Figure 4 shows an outline of a removable coupling part according to the invention.
Figure 5 shows a section of the removable coupling part according to the invention.
Figure 6 shows an outline of the butterfly valve according to the invention.
Figure 7 shows a section of the butterfly valve according to the invention.

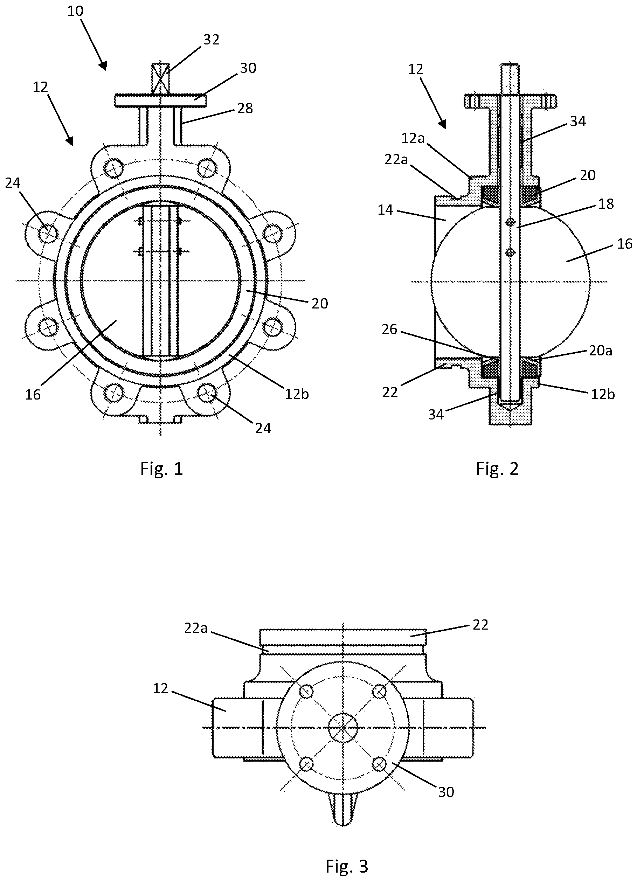

Figures 1-3 show a valve housing 12 of a butterfly valve 10 according to the invention. The valve housing 12 comprises a spindle 18 that extends vertically through most of the valve housing. A damper 16 is arranged standing in a through running boring 14, where the damper is fitted to the spindle 18. The spindle 18, and thus the damper 16, can be rotated either manually or automatically with the help of an activator (not shown). For example, an upper end 32 of the spindle that extends out of or extends above the valve housing 12 can function as a rotation pivot and is activated for rotation of the damper 16 so that flow through the valve housing is regulated. The valve housing 12 can comprise, on one or both sides of the damper 16, bushes or bearings 34 for the mounting of the spindle 18. Furthermore, a valve seat 20 is arranged in the boring 14 and around the damper 16, where the valve seat has a circular-cylindrical form and various materials and which can be cast in a sealing material and/or which can be fitted on or vulcanised on a hard insert ring or support ring (for example, as illustrated in figure 2). The valve seat 20 has conical contact surfaces 20a for the damper 16 at the through running of the spindle and also integrated sealing rings 26. The valve seat 20 can also be cast, for example, in one piece of plastic or rubber. Furthermore, the valve seat 20 lies against an inner edge in the valve housing 12 and a second (not shown) part can provide a corresponding edge which the valve seat 20 can lie against.

The damper 16 is formed, in principle, in a round shape with an external diameter that corresponds with the inner diameter of the valve seat 20, but where the damper at the through running of the spindle is formed with respective bevelled and flat top and bottom sections.

The upper part of the valve can comprise, in a known way, a neck 28 and a top flange 30.

A first side 12a of the valve housing 12 comprises a coupling end piece 22 for connection and comprises an external circular groove 22a for fitting to the coupling. A second side 12b comprises a coupling surface with several threaded bolt holes 24 arranged radially about the boring 14. Thereby, the invention as shown in the figures 1-3, can be connected to a coupling on the one side and to a standard flange connection (not shown), or the like, to a pipe on the other side.

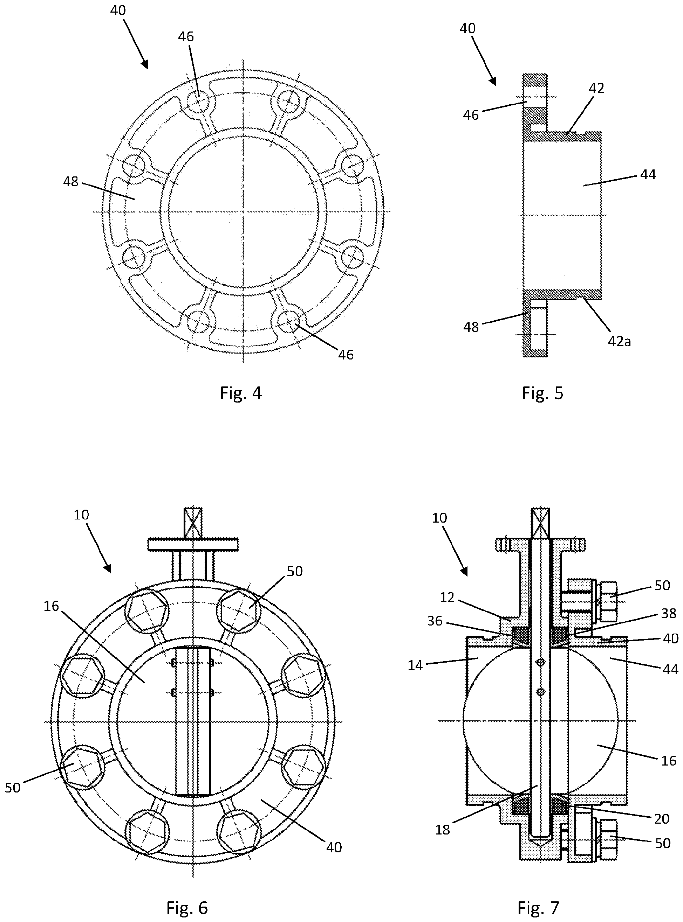

The figures 4 and 5 show a second coupling part 40 for use together with the valve housing 12. The coupling part 40 comprises a pipe piece in the form of a coupling end piece 42 for connecting. In a corresponding way, the coupling end piece 42 is fitted with an external circular groove 42a. The coupling part 42 further comprises a flange-like connection 48 fitted with several bolt holes 46, where the placing of the bolt holes 46 corresponds to the bolt holes 24 in the valve housing 12, i.e. with the same radial centreline.

The figures 6 and 7 show the coupling part 40 fitted to the valve housing 12. In this preferred embodiment the butterfly valve according to the invention can be used between two couplings in a pipe system. As shown in the figures, the coupling part 40 is securely bolted with the help of the bolts 50 that run through the bolt holes 24 in the flange part 48 of the coupling part 40 and which are screwed into the threaded bolt holes 24 of the valve housing 12. Thus, this provides a butterfly valve with two opposite coupling ends.

The valve seat 20 lies, as shown, against an inner edge 36 in the valve housing 12 and the second coupling part 40 provides a corresponding edge 38 against which the valve seat 20 lies. Thus, the valve seat 20 is inserted between the valve housing 12 and the coupling part 40 and surrounds the damper 16. Thereby, the valve seat 20 seals without the use of an additional gasket as the edge 36 in the valve housing 12 and the contact surface 38 of the coupling part 40 can function as sealing surfaces so that the valve seat gets compressed between these two parts and a watertight connection in all joints is achieved. The corresponding will be relevant at the use of a standard flange connection instead of the second coupling part, as described above.

Furthermore, the valve seat will be able to isolate the valve housing and this is something that can contribute to removing internal wear in the housing.

The butterfly valve can be supplied in a hot-dip galvanized embodiment. In, for example, a ballast system, hot-dip galvanisation is a common surface treatment of components. The valve with the coupling ends is both a valve and a piece of the pipe system and a corresponding surface treatment of the valve could therefore be an important feature. Previously, it has not been common that valves for use in such pipe systems have been supplied in hot-dip galvanised embodiments.

It shall also be mentioned that the coupling parts 22,42 can alternatively be connected to the pipes in the pipe system with the help of a loop coupling, i.e. a loop that can be tightened with the help of a rotary lifting arm and is securely locked in a tightened position. The intended loop coupling is not a real quick coupling, but a coupling intended for use in installation areas where pipe routes are often re-laid.

## Claims

1. Soft-sealing, concentric butterfly valve (10) for mounting between two couplings in a pipe system, the butterfly valve (10) comprising:
a valve housing (12) with a through running boring (14), in which a rotary damper (16), mounted to a spindle (18), is arranged standing in a circular-cylindrical valve seat (20), said valve seat (20) being equipped internally with conical contact surfaces (20a) for the damper (16),
the valve housing (12) comprises on a first side (12a), a coupling end piece (22) cast in one piece with the valve housing (12) and equipped with an external circular groove (22a) for connection with a first of said couplings in the pipe system,
the valve housing (12) comprises on a second side (12b) several threaded bolt holes (24) arranged radially around the through running boring (14), and a removable coupling part (40), said removable coupling part (40) being fastened to the valve housing (12) by bolts (50) inserted in the threaded bolt holes (24),
said removable coupling part (40) comprises a second coupling end piece (42) equipped with an external circular groove (42a) for connection with a second of said couplings in the pipe system, and
said valve seat (20) is compressed between the valve housing (12) and the removable coupling part (40) and surrounds the damper (16) to provide a leak proof connection.

2. Butterfly valve (10) according to claim 1, wherein the spindle (18) runs through the valve seat (20), and the valve seat (20) comprises integrated sealing rings (26) in the openings for the through running of the spindle.

3. Butterfly valve (10) according to claim 1, wherein the removable coupling part (40) comprises a boring (44) with the same diameter as the boring (14) in the valve housing (12).

4. Butterfly valve (10) according to claim 1, wherein the valve housing (12) is equipped with a neck (28) comprising a collar (30), and an upper part (32) of the spindle extends up above the collar (30) and makes up a rotating pivot.

5. Butterfly valve (10) according to claim 1, wherein the valve housing (12) comprises, on one or both sides of the damper (16), bushes or bearings (34) for mounting of the spindle (18).

6. Butterfly valve (10) according to claim 1, wherein the valve housing (12) comprises an internal edge (36) on which the valve seat (20) lies, where said edge (36) and a contact surface (38) of a flange connection or the coupling part (40) are arranged to function as sealing surfaces, as the valve seat (20) is compressed between these parts to provide the leak proof connection.

7. Butterfly valve (10) according to claim 1, wherein the butterfly valve (10) is surface treated with hot-dip galvanizing.

## Patentansprüche

1. Weichdichtendes konzentrisches Drosselventil (10) zum Anbringen zwischen zwei Kupplungsstücken in einem Rohrsystem, wobei das Drosselventil (10) aufweist:
ein Ventilgehäuse (12) mit einer Durchgangsbohrung (14), in der eine auf einer Achse (18) montierte Drehdrosselklappe (16) in einem kreiszylindrischen Ventilsitz (20) stehend angeordnet ist, wobei der Ventilsitz (20) innen mit konischen Anlageflächen (20a) für die Drosselklappe (16) ausgebildet ist, wobei
das Ventilgehäuse (12) an einer ersten Seite (12a) ein Kupplungsendstück (22) aufweist, das mit dem Ventilgehäuse (12) einstückig gegossen und mit einer äußeren kreisförmigen Nut (22a) zur Verbindung mit einem ersten der Kupplungsstücke in dem Rohrsystem versehen ist,
das Ventilgehäuse (12) an einer zweiten Seite (12b) mehrere radial um die Durchgangsbohrung (14) herum angeordnete Gewindebolzenlöcher (24) und ein abnehmbares Kupplungsteil (40) aufweist, wobei das abnehmbare Kupplungsteil (40) durch in die Gewindebolzenlöcher (24) eingesetzte Bolzen (50) an dem Ventilgehäuse (12) befestigt ist,
das abnehmbare Kupplungsteil (40) ein zweites Kupplungsendstück (42) aufweist, das mit einer äußeren kreisförmigen Nut (42a) zur Verbindung mit einem zweiten der Kupplungsstücke in dem Rohrsystem ausgebildet ist, und
der Ventilsitz (20) zwischen dem Ventilgehäuse (12) und dem entfernbaren Kupplungsteil (40) zusammengedrückt ist und die Drosselklappe (16) umgibt, um eine dichte Verbindung bereitzustellen.

2. Drosselventil (10) nach Anspruch 1, wobei die Achse (18) durch den Ventilsitz (20) verläuft, und der Ventilsitz (20) in den Öffnungen für den Verlauf der Achse integrierte Dichtringe (26) aufweist.

3. Drosselventil (10) nach Anspruch 1, wobei das abnehmbare Kupplungsteil (40) eine Bohrung (44) mit dem gleichen Durchmesser wie die Bohrung (14) in dem Ventilgehäuse (12) aufweist.

4. Drosselventil (10) nach Anspruch 1, wobei das Ventilgehäuse (12) mit einem Hals (28) ausgestattet ist, der einen Bund (30) aufweist, und ein oberer Teil (32) der Achse sich über den Bund (30) nach oben erstreckt und einen Drehzapfen bildet.

5. Drosselventil (10) nach Anspruch 1, wobei das Ventilgehäuse (12) ein- oder beidseitig der Drosselklappe (16) Buchsen oder Lager (34) zum Lagern der Achse (18) aufweist.

6. Drosselventil (10) nach Anspruch 1, wobei das Ventilgehäuse (12) einen Innenrand (36) aufweist, auf dem der Ventilsitz (20) liegt, wobei der Rand (36) und eine Kontaktfläche (38) einer Flanschverbindung oder des Kupplungsteils (40) angeordnet sind, um als Dichtflächen zu dienen, sobald der Ventilsitz (20) zwischen diesen Teilen zusammengedrückt ist, um die dichte Verbindung bereitzustellen.

7. Drosselventil (10) nach Anspruch 1, wobei das Drosselventil (10) mit Feuerverzinkung oberflächenbehandelt ist.

## Revendications

1. Vanne papillon concentrique à étanchéité souple (10) destinée à être montée entre deux raccords dans un système de tuyautage, la vanne papillon (10) comprenant :
un logement de vanne (12) avec un alésage traversant (14), dans lequel est agencé un amortisseur rotatif (16) monté sur une broche (18), reposant dans un siège de vanne cylindrique circulaire (20), ledit siège de la vanne (20) comportant dans sa partie interne des surfaces de contact coniques (20a) pour l'amortisseur (16) ;
le logement de la vanne (12) comprenant sur un premier côté (12a) une pièce d'extrémité d'accouplement (22) coulé d'une seule pièce avec le logement de la vanne (12) et comportant une rainure circulaire externe (22a) en vue d'une connexion à un premier desdits raccords dans le système de tuyautage ;
le logement de la vanne (12) comprenant sur un deuxième côté (12b) plusieurs trous de boulon taraudés (24) agencés radialement autour de l'alésage traversant (14), et une partie d'accouplement amovible (40), ladite partie d'accouplement amovible (40) étant fixée sur le logement de la vanne (12) par des boulons (50) insérés dans les trous de boulon taraudés (24) ;
ladite partie d'accouplement amovible (40) comprenant une deuxième pièce d'extrémité d'accouplement (42) comportant une rainure circulaire externe (42a) en vue d'une connexion à un deuxième desdits raccords dans le système de tuyautage ; et
ledit siège de la vanne (20) étant comprimé entre le logement de la vanne (12) et la partie d'accouplement amovible (40) et entourant l'amortisseur (16) pour assurer une connexion étanche.

2. Vanne papillon (10) selon la revendication 1, dans laquelle la broche (18) traverse le siège de la vanne (20), le siège de la vanne (20) comprenant des bagues d'étanchéité intégrées (26) dans les ouvertures en vue de la traversée de la broche.

3. Vanne papillon (10) selon la revendication 1, dans laquelle la partie d'accouplement amovible (40) comprend un alésage (44) ayant le même diamètre que l'alésage (14) dans le logement de la vanne (12).

4. Vanne papillon (10) selon la revendication 1, dans laquelle le logement de la vanne (12) comporte un goulot (28) comprenant un collier (30), une partie supérieure (32) de la broche s'étendant au-dessus du collier (30) et établissant un pivot rotatif.

5. Vanne papillon (10) selon la revendication 1, dans laquelle le logement de la vanne (12) comprend, sur l'un ou les deux côtés de l'amortisseur (16), des douilles ou des paliers (34) en vue du montage de la broche (18).

6. Vanne papillon (10) selon la revendication 1, dans laquelle le logement de la vanne (12) comprend un bord interne (36) sur lequel repose le siège de la vanne (20), ledit bord (36) et une surface de contact (38) d'une connexion à bride ou la partie d'accouplement (40) étant configurés pour servir des surfaces d'étanchéité lorsque le siège de la vanne (20) est comprimé entre ces parties, pour assurer une connexion étanche.

7. Vanne papillon (10) selon la revendication 1, dans laquelle la vanne paillon (10) est soumise à un traitement de surface par galvanisation par immersion à chaud.
